Europäisches Patentamt

(19) European Patent Office

Office européen des brevets

(11) Veröffentlichungsnummer: **0 081 696**
**B1**

(12) **EUROPÄISCHE PATENTSCHRIFT**

(45) Veröffentlichungstag der Patentschrift:
19.03.86

(51) Int. Cl.⁴: **F 16 H 47/04**

(21) Anmeldenummer: 82110563.2

(22) Anmeldetag: 16.11.82

(54) Hydrostatischmechanisches Stellkoppelgetriebe mit eingangsseitiger Leistungsverzweigung.

(30) Priorität: 01.12.81 DE 3147447

(43) Veröffentlichungstag der Anmeldung:
22.06.83 Patentblatt 83/25

(45) Bekanntmachung des Hinweises auf die Patenterteilung:
19.03.86 Patentblatt 86/12

(84) Benannte Vertragsstaaten:
DE FR GB IT NL SE

(56) Entgegenhaltungen:
DD - A - 59 218
US - A - 3 580 107
US - A - 3 888 139
US - A - 4 134 310
US - A - 4 232 568

(73) Patentinhaber: Jarchow, Friedrich, Prof. Dr.-Ing., Am Ruhrstein 37, D-4300 Essen 1 (DE)

(72) Erfinder: Jarchow, Friedrich, Prof. Dr.-Ing., Am Ruhrstein 37, D-4300 Essen 1 (DE)
Erfinder: Haensel, Dietrich, Dr.-Ing., Hustadtring 79, D-4630 Bochum 1 (DE)
Erfinder: Berger, Günter, Dipl.-Ing., Iltisweg 6, D-4350 Recklinghausen (DE)

(74) Vertreter: Herrmann-Trentepohl, Werner, Dipl.-Ing., Schaeferstrasse 18, D-4690 Herne 1 (DE)

LIBER, STOCKHOLM 1986

## Beschreibung

Die Erfindung betrifft ein hydrostatisch-mechanisches Stellkoppelgetriebe nach dem Oberbegriff des Anspruchs 1.

Die Bezeichnungen Differenzwelle und Summenwelle stammen aus Müller, H.W., "Die Umlaufgetriebe", S. 29, Springer Verlag Berlin, Heidelberg, New York, 1971. Die zugehörigen Begriffe werden nachfolgend erklärt.

Die auf ein dreiwelliges Umlaufgetriebe von außen einwirkenden Drehmomente müssen nach den Regeln der Mechanik in ihrer Summe gleich Null sein. Dies bedeutet aber, daß die Drehmomente von zwei Wellen gleiches Vorzeichen haben und daß das Drehmoment der dritten Welle entgegengesetztes Vorzeichen aufweist und betragsmäßig die Summe der beiden anderen Drehmomente ausmacht. Man bezeichnet die Welle, die betragsmäßig das größte Drehmoment führt, als Summenwelle und die beiden übrigen als Differenzwellen. Zum Beispiel sind bei einem Umlaufgetriebe mit Hohlrad, Steg mit Planetenrädern und Sonnenrad die Stegwelle die Summenwelle und die Hohlrad- sowie Sonnenradwelle die Differenzwellen.

Das eingangs aufgeführte hydrostatischmechanische Stellkoppelgetriebe mit antriebsseitiger Leistungsverzweigung ist nach Fig. 8 der US-A-3 888 139 bekannt und verwirklicht einen relativ großen kontinuierlichen Gesamtverstellbereich der Übersetzung, wobei es verhältnismäßig gute Wirkungsgrade aufweist. Beim Einsatz im Fahrzeug kann es dem Fahrer das Schalten abnehmen, das Betreiben des Verbrennungsmotors entlang seiner optimalen Verbrauchskurve ermöglichen und so dazu beitragen, Kraftstoff einzusparen.

Zu diesem hydrostatisch-mechanischen Stellkoppelgetriebe gehören zwei dreiwellige Umlaufgetriebe, von denen einerseits die Sonnenräder 33, 41 und andererseits der Steg 30 mit dem Hohlrad 36 miteinander gekoppelt sind. Die Einheit Steg 30 und Hohlrad 36 steht über die Zahnräder 28, 26, Schaltkupplung 25 und Zahnräder 22, 21 mit der Antriebswelle 20 in Verbindung. Die beiden zusammengeschlossenen Sonnenräder 33, 41 sind über die Zahnräder 43, 44, das hydrostatische Getriebe mit der Konstanteinheit 46 und der Verstelleinheit 24 und über die Zahnräder 22, 21 mit der Antriebswelle 20 gekoppelt. Den beiden gekoppelten dreiwelligen Umlaufgetrieben sind zwei dreiwellige Umlaufgetriebe gleicher Übersetzung mit dem Sonnenrad 163, den Planetenrädern 162 und dem Hohlrad 164 einerseits sowie mit dem Sonnenrad 263, den Planetenrädern 262 und dem Hohlrad 264 andererseits nachgeschaltet. Sie haben einen gemeinsamen Steg 260, der mit der Abtriebswelle 250 eine Einheit bildet. Für den Verstellbereich 1, der nach dem Anfahrbereich folgt, ist die Kupplung 265, für den Verstellbereich 2 die Kupplung 168, für den Verstellbereich 3 die Kupplung 152 und für den Verstellbereich 4 die Kupplung 54 geschlossen. Der Betrieb in den Verstellbereichen 1 bis 4 erfordert eine geschlossene Kupplung 25. Beim Anfahren sind die Kupplungen 49 und 152 eingelegt. Alle Kupplungen schalten bei synchronen Drehzahlen, lastfrei und ohne Zugkraftunterbrechung.

Das Getriebe nach der US-A-3 888 139 fährt rein hydrostatisch an. Es fließt dann die gesamte zu übertragende Leistung durch das hydrostatische Getriebe. Dieses muß für eine große Eckleistung ausgelegt werden. Sie berechnet sich aus dem Produkt der betragsmäßig größten Werte für Verdrängungsvolumen, Verdrängermaschinendrehzahl und hydrostatischem Differenzdruck, wobei die einzelnen Werte bei verschiedenen Betriebszuständen auftreten'können. Nach Fig. 10 der US-A-3 888 139 beläuft sich das Verhältnis von Anfahr-Eckleistung zur betragsmäßig wirksamen maximalen hydrostatischen Leistung in den nachfolgenden 4 Verstellbereichen bzw. Gangstufen auf 100/48 = 2,08. Es müssen also anfahrbedingt um 108 % größere Verdrängungsvolumen installiert werden. Da nun größere Verdrängermaschinen in Rücksicht auf die zulässige maximale Gleitgeschwindigkeit innerhalb der Verdrängermaschinen zu geringeren Werten für ihre maximal zulässige Drehzahl kommen, erhöht sich das Verdrängungsvolumen noch um einen weiteren Betrag. Da die zulässigen maximalen Drehzahlen verschieden großer Verdrängermaschinen sich wie die 3. Wurzel aus ihrem Volumenverhältnis verhalten, müssen letztlich $3\sqrt{2{,}08} \cdot 2{,}08 = 2{,}65$ fache Verdrängungsvolumen installiert werden.

Das Anfahren erfordert also um 165 % größere Verdrängermaschinen. Dies bedeutet nicht nur großen baulichen Aufwand, sondern auch, daß das hydrostatische Getriebe stets mit Teilleistung läuft, wodurch ja bekanntlich im allgemeinen schlechtere Wirkungsgrade vorliegen.

Bei einem solchen Getriebe lassen sich nicht mehr als vier Verstellbereiche realisieren. Dies muß besonders bei gefordertem relativ großen Gesamtverstellbereich als Nachteil angesehen werden. Denn je feiner man einen bestimmten Gesamtverstellbereich unterteilen kann, um so kleiner wird betragsmäßig der mit verhältnismäßig ungünstigem Wirkungsgrad behaftete maximale hydrostatische Leistungsfluß.

Die Schaltkupplung 152 ist innerhalb des drehenden Steges 260 angeordnet, wodurch sie nachteilig nur schwer zugängig wird und erhöhten Bauaufwand erfordert.

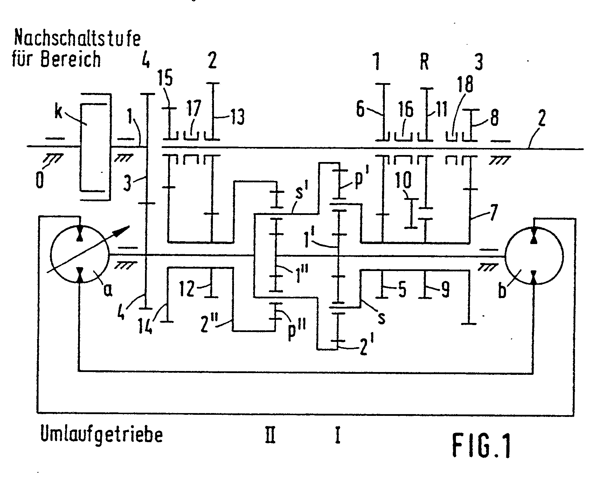

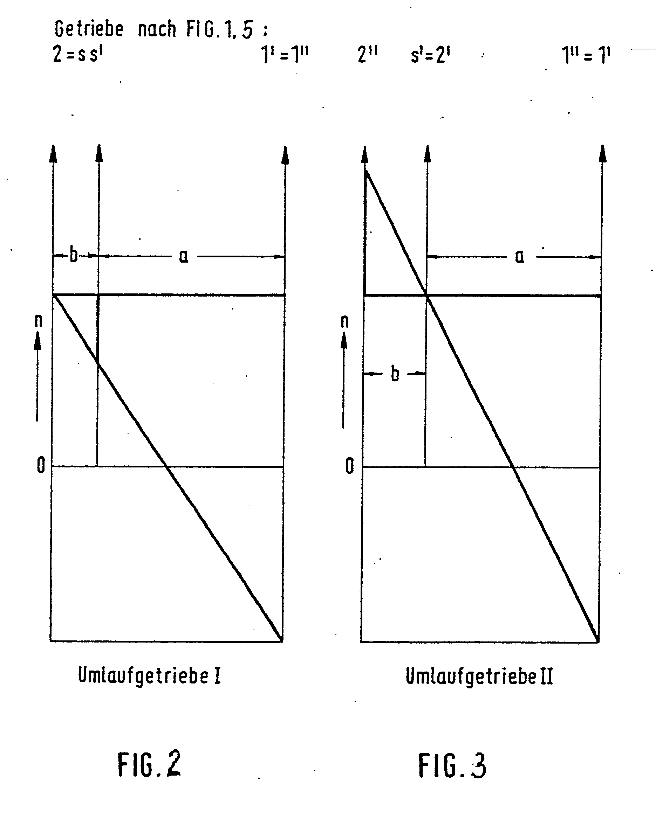

Fig. 1 der US-A-35 80 107 zeigt ein hydrostatisch-mechanisches Stellkoppelgetriebe, zu dem zwei gleiche dreiwellige Umlaufgetriebe gehören, von denen die beiden eine Einheit bildenden Stege 13 mit der Antriebswelle 11 verbunden sind und von denen die Sonnenräder 22, 24 über Zahnräder 30, 31, 33, 34 mit einem hydrostatischen Stellgetriebe, bestehend aus den verstellbaren Verdrängermaschinen 32, 35, wechselweise gekoppelt werden und von denen die Planetenräder 15 einerseits und 16 andererseits über weitere Planetenräder 19, 20 miteinander im Eingriff stehen und von denen schließlich die Hohlräder 21, 23 wechselweise über Nachschaltstufen auf die Abtriebswelle 50 wirken.

Aus den Fig. 1, 17, 18, 20 dieser Patentschrift geht hervor, daß die maximale hydrostatische Leistung bei halber maximaler Drehzahl der Verdrängermaschinen, bei halbem maximalen Verdrängungsvolumen und bei 0,8-fachem hydrostatischen Druck auftritt. Somit beträgt die aus diesen Werten sich ergebende hydrostatische Eckleistung das fünffache der wirksamen maximalen hydrostatischen Leistung, wodurch relativ groß bauende Verdrängermaschinen notwendig werden.

Das in Fig. 14 der US-A-35 80 107 dargestellte Getriebe mit eingangsseitiger Leistungsverzweigung besitzt wieder zwei gleiche dreiwellige Umlaufgetriebe. Bei ihm hat die wechselweise über Zahnräder 521, 522 oder 431, 430 an die Sonnenräder 424, 422 ankoppelbare Verdrängermaschine 432 - zum Unterschied des Getriebes nach Fig. 1-konstantes Verdrängungsvolumen. Die verstellbare Verdrängermaschine 435 ist über Zahnräder 505, 507 an die Antriebswelle 411 angeschlossen.

Ein Vergleich der Fig. 18 und 19 zeigt, daß das Getriebe nach Fig. 14 einen um 3,3-fachen höheren wirksamen maximalen hydrostatischen Leistungsfluß hat. Darüber hinaus ist die Eckleistung die sich betragsmäßig aus dem Produkt der größten auftretenden Werte für Verdrängungsvolumen, Drehzahl und Druckdifferenz ergibt, noch um den Faktor 2 größer als die wirksame maximale hydrostatische Leistung. Aus Fig. 31 geht nämlich hervor, daß betragsmäßig der maximale Differenzdruck bei der Abtriebsdrehzahl von 2400 min$^{-1}$ um den Faktor 2 größer ist als z.B. bei der Abtriebsdrehzahl von 1600 min$^{-1}$, bei der betragsmäßig die maximalen Werte für Verdrängungsvolumen und Drehzahlen der Verdrängermaschinen (vgl. Fig. 28) und der wirksamen hydrostatischen Leistung (vgl. Fig. 29) auftreten. Das Verhältnis der Eckleistungen für die Getriebe nach Fig. 1 und 14 beläuft sich auf 2. 3,3/5 = 1,32. Für das Getriebe nach Fig. 14 sind also noch größere Verdrängermaschinen zu installieren.

Auch die Getriebe nach der US-A-35 80 107 benutzen das hydrostatische Getriebe zum Anfahren, wodurch die bereits jeweils ausgewiesenen Eckleistungen noch größer werden. Unter Einbezug des Anfahrens beläuft sich somit die Eckleistung für das Getriebe nach Fig. 1 auf das 1,4. 5 = 7-fache und für das Getriebe nach Fig. 14 auf das 2. 2 = 4-fache der jeweils betragsmäßig wirksamen maximalen hydrostatischen Leistung.

Die nach der US-A-35 80 107 vorgeschlagenen Getriebe bauen relativ groß, schwer und kostenaufwendig, da sowohl verhältnismäßig große Verdrängungsvolumen als auch Kopplungsplanetenräder notwendig sind.

Außerdem ist zu berücksichtigen, daß die hydrostatische Leistung über 7 nacheinander folgende Zahneingriffe fließt, was sich ungünstig auf den Wirkungsgrad des gesamten Getriebes auswirkt.

Aus der DD-A-59 218 ist es bereits bekannt zwischen Kraftmaschine und Antriebswelle eines hydrostatischen - mechanischen Verbundgetriebes, bei dem der hydrostatische Getriebe teil eine innere Leistungsvorzweigung aufweist, eine ReibungsKupplung zum Aufahren vorzusehen.

Der Erfindung liegt die Aufgabe zugrunde, ein hydrostatisch-mechanisches Stellkoppelgetriebe mit eingangsseitiger Leistungsverzweigung zu schaffen, bei dem sich mit geringem Aufwand unbeschränkt viele aufeinanderfolgende Verstellbereiche der Übersetzung realisieren lassen, bei dem auch unter Berücksichtigung des Anfahrens betragsmäßig die hydrostatische Eckleistung nicht größer als die wirksame maximale hydrostatische Leistung ist, bei dem die maximale wirksame hydrostatische Leistung möglichst klein ist und bei dem schließlich bessere Werte für Gewicht, Baugröße, Herstellkosten und Wirkungsgrade als nach dem derzeitigen Stand der Technik vorliegen.

Diese Aufgabe wird erfindungsgemäß durch die Kombination folgender an sich bekannter Merkmale gelöst, und zwar

a) daß zum Anfahren eine Reibungskupplung zwischen Kraftmaschine und Antriebswelle vorgesehen wird

b) daß die Nachschaltstufen aus Stirnradstufen bestehen

c) daß die Nachschaltstufen mit Zahnkupplungen angeschlossen werden.

In weiterer Ausgestaltung der Erfindung wird die Nachschaltstufe für den Verstellbereich mit Rückwärtsfahrt mit Hilfe einer Zahnkupplung an die Summenwelle des Umlaufgetriebes I angeschlcssen.

Die mit der Erfindung erzielten Vorteile bestehen darin, daß ohne erheblichen Aufwand unbeschränkt viele Verstellbereiche den Gesamtverstellbereich der Übersetzung bilden können und daß dadurch betragsmäßig die wirksame maximale hydrostatische Leistung besonders klein wird und daß aber auch mit Einbezug des Anfahrens die hydrostatische Eckleistung nicht größer als die wirksame maximale hydrostatische Leistung ist. Die geschilderten Vorzüge wirken sich dahingehend aus, daß nur relativ kleine Verdrängungsvolumen zu installieren sind und daß sich bei dem erfindungsgemäßen Getriebe günstigere Werte für Gewicht, Baugröße, Herstellkosten und Wirkungsgrade als bei allen anderen bekannten Lösungen ergeben.

Fig. 1 zeigt ein Ausführungsbeispiel der Erfindung, und zwar für ein Fahrzeug mit Hinterachsantrieb. Zwischen Verbrennungsmotor und Getriebe ist eine Fliehkraftkupplung K angeordnet. Das symbolisch durch Schraffur angedeutete Gehäuse wird mit 0, die Antriebswelle mit 1 und die Abtriebswelle mit 2 bezeichnet. Die verstellbare Verdrängermaschine a sowie das Hohlrad 2' der Umlaufgetriebestufe I und der Steg s' mit den Planetenrädern p'' der Umlaufgetriebestufe II stehen über die Zahnräder 3,4 mit der Antriebswelle 1 in Verbindung. Die Verdrängermaschine b hat konstantes Volumen und ist an die Sonnenräder 1' von Stufe I sowie 1'' von Stufe II angeschlossen. Der Steg s mit den Planetenrädern p' der Stufe I steht mit den Zahnrädern 5, 6 vom 1. Gang, den Zahnrädern 7,8 vom 3. Gang und den Zahnrädern 9,10,11 vom Rückwärtsgang R in Verbindung. Hingegen bildet das Hohlrad 2'' der Stufe II mit den Zahnrädern 12,13 den 2. Gang und mit den Zahnrädern 14,15 den 4. Gang. Zur Schaltung dienen Zahnkupplungen, und zwar 16 für den 1. Gang und Rückwärtsgang R, 17 für den 2. und 4. Gang sowie 18 für den 3. Gang.

Die Drehzahldiagramme für Stufe I nach Fig. 2 und für Stufe II nach Fig. 3 tragen zum Verständnis der Wirkungsweise des Getriebes bei. Die geneigte Gerade in der für Stufe I zutreffenden Fig. 2 gilt für den Anfahrzustand mit eingelegtem 1. Gang. Mit vorgegebener Antriebsdrehzahl $n_1$ liegt $n_2'$ fest. Die Verdrängermaschine a ist voll ausgeschwenkt. Dadurch stellt sich eine Drehzahl $n_1' = n_2'$ ein. Der Schnittpunkt der Geraden mit der Leiter s liefert die Drehzahl $n_s$, die mit der Übersetzung des 1. Ganges multipliziert die Abtriebsdrehzahl $n_2$ ergibt. Bei konstantem Wert $n_2'$ verringert sich durch Einschwenken der Schrägscheibe der Betrag der Drehzahl $n_1'$ und damit wächst $n_s$ bzw. $n_2$. Im Nullpunkt steht das Rad 1'. Die jetzt senkrecht stehende Schrägscheibe der Verdrängermaschine a läßt keine Drehung der Verdrängermaschine b zu. Durch Verschwenken in Richtung der anderen Extremlage der Schrägscheibe wachsen $n_1'$, $n_s$ bzw. $n_2$ weiter. In der Extremlage ist der Kupplungspunkt erreicht. Alle Wellen der beiden Stufen I und II haben jetzt die gleiche Drehzahl. Da der 2. Gang dieselbe Übersetzung wie der 1. aufweist, kann er nun bei synchroner Drehzahl eingelegt und der 1. Gang ausgelegt werden.

Für die jetzt in Aktion befindliche Stufe II trifft Fig. 3 zu. Die Schrägscheibe bewegt sich nun wieder zurück zur ursprünglichen Extremlage. Die waagerechte Gerade geht in die geneigte über. Die Drehzahl $n_2''$ erhöht sich über den Kupplungspunkt hinaus, damit wächst $n_2$ weiter an. In der Extremlage selbst erfolgt der Wechsel zum 3. Gang. Dies läßt sich wieder bei synchroner Drehzahl verwirklichen da die Übersetzung des dritten Ganges entsprechend ausgelegt ist. Die Verstellung zum 4. Gang geschieht analog der vom 1. zum 2. Gang.

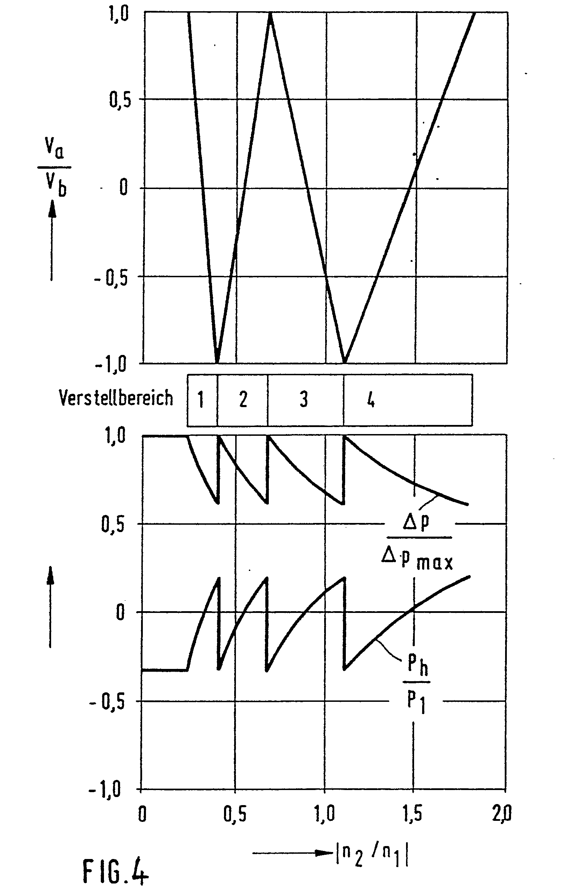

In Fig. 4 sind abhängig von dem Verhältnis Abtriebsdrehzahl zur Antriebsdrehzahl $n_2/n_1$ des gesamten Getriebes die Drehzahlverhältnisse $n_1'/n_1 = n_1''/n_1$, das Verdrängungsvolumenverhältnis $V_a/V_b$ sowie das Differenzdruckverhältnis $\triangle p/\triangle p_{max}$ und das Verhältnis der hydrostatischen Leistung zur Antriebsleistung $P_h/P_1$ für die

verschiedenen Vorwärtsgänge dargestellt. Aus dieser Fig. 4 geht hervor, daß betragsmäßig die größte hydrostatische Leistung bei den Maximalwerten der Drehzahlen $n_1' = n_1''$, des Verdrängungsvolumens $V_a$ und des Differenzdruckes $\triangle p$ auftritt. Somit ist betragsmäßig die hydrostatische Eckleistung gleich der wirksamen hydrostatischen Leistung.

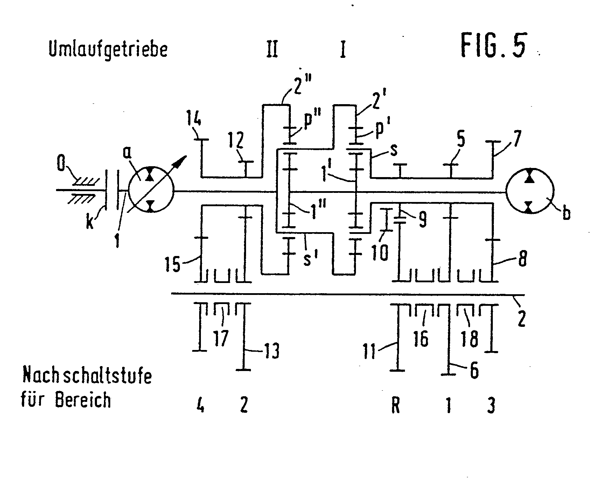

Fig. 5 zeigt ein weiteres Ausführungsbeispiel der Erfindung, und zwar für ein Fahrzeug mit Vorderradantrieb. Das Gehäuse ist wieder mit 0, die Antriebswelle mit 1 und die Abtriebswelle mit 2 bezeichnet. Die verstellbare Verdrängermaschine a sowie das Hohlrad 2' der Stufe I und der Steg s' mit den Planetenrädern p'' der Stufe II stehen über eine Fliehkraftkupplung K mit der Antriebswelle 1 in Verbindung. Die Verdrängermaschine b hat konstantes Volumen und ist an die Sonnenräder 1' von Stufe I sowie 1'' von Stufe II angeschlossen. Der Steg s mit den Planetenrädern p' der Stufe I steht mit den Zahnrädern 5,6 vom 1. Gang, 7,8 vom 3. Gang und 9,10,11 vom Rückwärtsgang R in Verbindung. Hingegen bildet das Hohlrad 2'' der Stufe II mit den Zahnrädern 12, 13 den 2. Gang und mit den Zahnrädern 14, 15 den 4. Gang. Zur Schaltung dienen die Zahnkupplungen 16, 17 und 18.

**Patentansprüche:**

1. Hydrostatisch-mechanisches Stellkoppelgetriebe mit eingangsseitiger Leistungsverzweigung, zu dem zwei dreiwellige Umlaufgetriebe I und II gehören, von denen eine Differenzwelle (Hohlrad 2') des Umlaufgetriebes I mit der Summenwelle (Steg s') des Umlaufgetriebes II eine Einheit und die Antriebswelle bildet und von denen die zweite Differenzwelle (Sonnenrad 1') des Umlaufgetriebes I mit einer Differenzwelle (Sonnenrad 1'') des Umlaufgetriebes II gekoppelt ist und über ein hydrostatisches Stellgetriebe (b) mit der Antriebswelle (1) in Verbindung steht und von denen schließlich die Summenwelle (Steg s) des Umlaufgetriebes I einerseits und die zweite Differenzwelle (Hohlrad 2'') des Umlaufgetriebes II andererseits über Nachschaltstufen wechselweise auf die Abtriebswelle (2) wirken können, so daß mehrere aneinanderreihende stufenlose Verstellbereiche (1 bis 4 und R) den Gesamtverstellbereich der Übersetzung bilden, wobei die Nachschaltstufen, die jeweils für zwei beüachbarte Verstellbereiche, und zwar beginnend mit dem Verstellbereich 1, der nach dem Anfahrbereich folgt, die gleiche Übersetzung aufweisen und wobei die Nachschaltstufen für die Verstellbereiche (1 und 3) mit ungerader Ziffer an die Summenwelle (Steg s) des Umlaufgetriebes I und für die Verstellbereiche (2 und 4) mit gerader Ziffer an die Differenzwelle (Hohlrad 2'') des Umlaufgetriebes II angeschlossen werden und wobei die Nachschaltstufen in ihren Übersetzungen so abgestimmt sind, daß der Verstellbereichswechsel bei synchronen-Drehzahlen lastfrei und ohne Zugkraftunterbrechung erfolgt, gekennzeichnet durch die Kombination folgender, an sich bekannter Merkmale,

a) daß zum Anfahren eine Reibungskupplung (K) zwischen Kraftmaschine und Antriebswelle (1) vorgesehen wird

b) daß die Nachschaltstufen aus Stirnradstufen bestehen

c) daß die Nachschaltstufen mit Zahnkupplungen angeschlossen werden.

2. Hydrostatisch-mechanisches Stellkoppelgetriebe mit eingangsseitiger Leistungsverzweigung nach Anspruch 1, dadurch gekennzeichnet,

daß die Nachschaltstufe für den Verstellbereich (R) mit Rückwärtsfahrt mit Hilfe einer Zahnkupplung an die Summenwelle (Steg s) des Umlaufgetriebes I angeschlossen wird.

### Claims

1. A hydrostatic-mechanical transmission with input split power, comprising two three-shaft planetary gear sets I and II, in which one difference shaft (annulus 2') of the planetary gear set I forms a unit, and, together with the sum shaft (cage s') of the planetary gear set II, forms the drive shaft, in which the second difference shaft (sun wheel 1') of the planetary gear set I is coupled with one difference shaft (sun wheel 1'') of the planetary gear set II and is connected via a hydrostatic transmission (b) with the drive shaft (1), and in which the sum shaft (cage s) of the planetary gear set I on the one hand and the second difference shaft (annulus 2'') of the planetary gear set II on the other hand can act alternately, by way of output coupling stages, upon the driven shaft (2), so that several unstepped gearchange ranges in series (1 to 4 and R) form the total gearchange ratio range, with the output coupling stages exhibiting at any given instant the same transmission ratio for two adjacent gearchange ranges, beginning with gearchange range 1 which follows the starting range, with the output coupling stages for the odd-number gearchange ranges (1 and 3) being coupled to the sum shaft (cage s) of the planetary gear set I and the output coupling stages for the even-number gearchange ranges (2 and 4) being coupled to the difference shaft (annulus 2'') of the planetary gear set II, and with the output coupling stages being adjusted in their ratios in such a way that changes of gearchange range take place synchronously without load and without interruption of tractive power, characterised by the combination of the following features, known in themselves:

a. that for starting a friction clutch (K) is provided between the motor and the drive shaft

b. that the output coupling stages consist of spurgear stages

c. that the output coupling stages are connected to jaw clutch couplings.

2. A hydrostatic-mechanical transmission with input split power according to claim 1, characterised in that the output coupling stage for the reverse gearchange range (R) is connected to the sum shaft (cage s) of the planetary gear set I by means of a jaw clutch coupling.

### Revendications

1. Transmission hydrostatique-mécanique régulée à bifurcation de la puissance du côté entrée, comprenant deux trains planétaires à trois arbres I et II, dont un arbre différentiel (roue creuse 2') du train planétaire I forme un ensemble avec l'arbre sommateur (bras porte-train s') du train planétaire II et l'arbre d'entraînement, et dont le second arbre différentiel (roue soleil 1') du train planetaire I est couplé avec un arbre différentiel (roue soleil 1'') du train planétaire II el est en liaison avec l'arbre d'entrainement (1) par l'intermédiaire d'un mécanisme de réglage hydrostatique (b), et dont finalement l'arbre sommateur (bras porte-train s) du train planétaire I d'une part et le second arbre différentiel (roue creuse 2'') du train planétaire II d'autre part peuvent agir tour à tour par l'intermédiaire d'étages successifs sur l'arbre de sortie (2) de manière que plusieurs plages de réglage disposées en série et continues (1 à 4 et R) forment la totalité de la plage de réglage de la transmission, les étages successifs qui présentent respectivement pour deux plages de réglage voisines, à savoir en commençant par la plage de réglage 1 qui suit la plage de démarrage, la même démultiplication, et les étages successifs des plages de réglage (1 et 3) de nombre impair étant raccordés à l'arbre sommateur (bras porte-train s) du train d'engrenages 1 et pour les plages de réglage (2 et 4) de nombre pair à l'arbre différentiel (roue creuse 2'') du train planétaire II, et les étages successifs étant déterminés du point de vue de leurs démultiplications de manière que le changement de plage de réglage s'effectue à des vitesses de rotation synchrones sans charge et sans interruption de la force de traction, caractérisée par la combinaison des caractéristiques suivantes connues en soi:

a) le montage entre le moteur et l'arbre d'entraînement (1) d'un embrayage à friction (K) pour le démarrage,

b) la constitution des étages successifs par des étages à roues droites,

c) le raccordement des étages successifs par des accouplements à dents.

2. Transmission hydrostatique-mécanique régulée comprenant une bifurcation de la puissance du côté entrée, selon la revendication 1, caractérisée en ce que l'étage destiné à la plage de réglage (R) de marche arrière est raccordé à l'aide d'un accouplement à dents à l'arbre sommateur (bras porte-train s) du train planétaire I.

1 / 4

FIG.1

*2 / 4*

Getriebe nach FIG. 1, 5 :
2 = s s'                    1' = 1''     2''    s' = 2'                    1'' = 1'

$n$

$b$ → ← $a$ →

$n$

$0$

Umlaufgetriebe I

FIG. 2

$n$

$a$ →

$n$

$b$ →

$0$

Umlaufgetriebe II

FIG. 3

3/4

FIG.4

Umlaufgetriebe                    II        I              FIG. 5

Nachschaltstufe
für Bereich        4    2                R    1    3